# EUROPEAN PATENT APPLICATION

(11) **EP 4 353 963 A1**
(43) Date of publication of application: **17.04.2024**
(21) Application number: 22201687.5
(22) Date of filing: 14.10.2022
(51) Int. Cl.: F02M 21/02, F02B 19/12, F02B 19/10

(54) **AMMONIA COMBUSTION ENGINE**

(71) Applicant: MAHLE International GmbH, 70376 Stuttgart (DE)
(72) Inventor: BASSETT, Dr. Michael, Northampton, NN14 4RJ (GB); BLAXILL, Hugh, Novi, Michigan, 48374 (US); BUNCE, Michael, Plymouth, 48170 (US); COOPER, Adrian, Northampton, NN46AE (GB); HALL, Jonathan, Hollowell, NN6 8RN (GB)
(74) Representative: BRP Renaud & Partner mbB Rechtsanwälte Patentanwälte Steuerberater

(57) **Abstract**

The invention relates to an ammonia-burning combustion engine (1) with a main chamber (5) and a spark plug (10). A pre-chamber (11) with at least one nozzle (12) is arranged between the main chamber (5) and the spark plug (10). The spark plug (10) is arranged in the pre-chamber (11) and the at least one nozzle (12) fluidically connects the main chamber (5) and the pre-chamber (11).

## Description

The invention relates to an ammonia combustion engine comprising a main chamber for combustion of the ammonia and comprising a spark plug for igniting the ammonia in the main chamber according to the generic term of claim 1.

An ammonia combustion engine is known from EP 2 378 094 A1.

Internal combustion engines are used in a variety of applications including motorcycles, cars, trucks, ships and industrial power plants. Due to climate change concerns, efforts are being made to reduce the use of fossil fuels and to use an alternative fuel that is free of carbon dioxide emissions. Ammonia (NH3) is an excellent hydrogen carrier without carbon and is an attractive alternative to fossil fuels. The combustion of ammonia eliminates both carbon emissions and sulfur emissions. However, ammonia should be handled with special care as leakage can cause severe health damage. For this reason, ammonia may be particularly suitable where industrial safety protocols can be satisfactorily implemented. In particular, ammonia may be suitable as a fuel for commercial shipping. However, a key challenge in using ammonia in an ammonia combustion engine is the relatively slow burning speed of ammonia. The laminar flame speed of ammonia is about one quarter of the burning speed of premixed gasoline. Such slow combustion can lead to combustion stability issues and reduced thermal efficiency of the ammonia combustion engine. It is also likely to prevent the engine from being operated under lean, or dilute, conditions, so that formation of harmful nitrogen oxides (NOx) cannot easily be avoided.

It is therefore the object of the invention to provide an improved or at least alternative embodiment for an ammonia combustion engine of the type described, in which the disadvantages described are overcome.

This object is solved according to the invention by the independent claim 1. Advantageous embodiments are the subject of the dependent claims.

The present invention is based on the general idea of providing a pre-chamber in the ammonia combustion engine, thereby improving the combustion of the gas mixture containing ammonia. An ammonia combustion engine contains a main chamber for combustion of the gas mixture containing ammonia and a spark plug for igniting the gas mixture containing ammonia in the main chamber. According to the invention, the ammonia combustion engine comprises a pre-chamber arranged between the main chamber and the spark plug for initiating ignition in the main chamber. Thereby, the spark plug is arranged with an ignition end in the pre-chamber and the main chamber and the pre-chamber are fluidically connected via at least one nozzle.

In the ammonia combustion engine according to the invention, ignition is initiated within the pre-chamber. For this purpose, the gas mixture containing ammonia located within the pre-chamber is ignited by means of the spark plug. The gas mixture containing ammonia can comprise air and ammonia and can additionally comprise an accelerant such as hydrogen or a diluent such as recirculated combustion products. The pre-chamber is fluidly connected to the main chamber by at least one nozzle which may be configured to accelerate the ignited gas mixture from the pre-chamber into the main chamber after ignition of the gas mixture in the pre-chamber. After ignition of the gas mixture in the pre-chamber, the ignited gas mixture is then accelerated from the pre-chamber through the at least one nozzle into the main chamber and the remaining gas mixture in the main chamber is ignited. Preferably, a plurality of nozzles is provided so that the ignited gas mixture is accelerated through a plurality of nozzles into the main chamber, thereby igniting the remaining gas mixture in the main chamber simultaneously at a plurality of points. As a result, combustion can be substantially accelerated and an amount of the gas mixture containing ammonia required for combustion can be reduced. In addition, a dilute mixture of ammonia can be more readily combusted and, as a result, the formation of nitrogen oxides can be reduced.

In an advantageous embodiment of the ammonia combustion engine, it may be provided that the pre-chamber is formed in a cylinder head of the ammonia combustion engine. Alternatively, the pre-chamber may be formed in a separate insert and the separate insert may be inserted into a cylinder head of the ammonia combustion engine and fixed to the cylinder head.

The main chamber and the pre-chamber can in particular be fluidically connected via at least two nozzles. At least two of the nozzles may have a different diameter and/or a different orientation with respect to a longitudinal central axis of the spark plug. In principle, the number of nozzles, the diameter of the nozzles and the orientation of the nozzles can be adapted in such a way that the combustion of the gas mixture containing ammonia - in this case the ammonia-air mixture - in the main chamber is accelerated and an amount of ammonia required for combustion is reduced.

The ammonia combustion engine may contain a direct fuel injector for injecting ammonia and/or an indirect fuel injector for injecting the gas mixture containing ammonia. The direct fuel injector fluidically opens into the main chamber of the ammonia combustion engine and the indirect fuel injector opens into an inlet channel of the ammonia combustion engine leading into the main chamber. The direct fuel injector and/or the indirect fuel injector can be used to adjust the amount of the gas mixture containing ammonia in the main chamber, thereby optimizing combustion.

The ammonia combustion engine may also contain a secondary fuel injector, wherein the secondary fuel injector fluidically opens into the pre-chamber of the ammonia combustion engine. If the ammonia combustion engine does not contain a secondary fuel injector, it is usually referred to as a passive application. If a secondary fuel injector is provided in the ammonia combustion engine, it is referred to as an active application. Advantageously, the secondary fuel injector may be configured to inject the gas mixture containing ammonia into the pre-chamber. By injecting the gas mixture containing ammonia directly into the pre-chamber, the ignition of the gas mixture containing ammonia in the pre-chamber could be achieved more readily when operating with a lean mixture of ammonia in the main combustion chamber and thereby the overall efficiency and combustion stability can be optimized. Alternatively, the secondary fuel injector may be configured to inject a further fuel into the pre-chamber. The further fuel is thereby different from the gas mixture containing ammonia and may be, for example, hydrogen. This may further improve ignition and combustion in the ammonia combustion engine.

Other important features and advantages of the invention will be apparent from the sub-claims, from the drawings and from the accompanying figure description with reference to the drawings.

It is understood that the above features, and those to be explained below, may be used not only in the combination indicated in each case, but also in other combinations or alone, without departing from the scope of the present invention.

Preferred embodiments of the invention are shown in the drawings and will be explained in more detail in the following description, wherein like reference signs refer to like or similar or functionally identical components.

It shows, schematically in each case
- Fig. 1: a sectional view of an ammonia combustion engine according to the invention in a first embodiment;
- Fig. 2: a sectional view of an ammonia combustion engine according to the invention in a second embodiment.

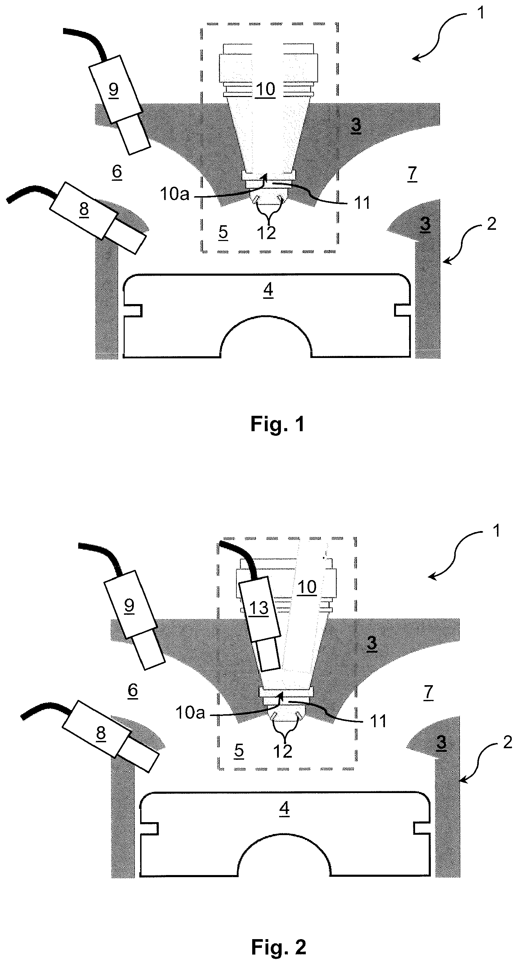

Fig. 1 shows an ammonia-burning ammonia combustion engine 1 according to the invention in a first embodiment on a cylinder 2. The cylinder 2 comprises a wall 3 and a piston 4 which delimit a main chamber 5 of the ammonia combustion engine 1. It is understood that a plurality of such cylinders 2 may be provided in the ammonia combustion engine 1. The ammonia combustion engine 1 further comprises an intake passage 6 and an exhaust passage 7 leading into and out of the main chamber 5, respectively. The ammonia combustion engine 1 is adapted to burn a gas mixture containing ammonia.

The ammonia combustion engine 1 contains either a direct fuel injector 8 for injecting the gas mixture containing ammonia into the main chamber 5, or an indirect fuel injector 9 for injecting the gas mixture containing ammonia into the intake passage 6. Further, the ammonia combustion engine 1 contains a spark plug 10 for igniting the gas mixture containing ammonia in the main chamber 5. The ammonia combustion engine 1 further comprises a pre-chamber 11 arranged between the spark plug 10 and the main chamber 5. Thereby, the spark plug 10 is arranged with its ignition end 10a in the pre-chamber 11. A plurality of nozzles 12 are formed between the pre-chamber 11 and the main chamber 5.

In the ammonia combustion engine 1, ignition takes place in the pre-chamber 11. In this process, a gas mixture - in this case an ammonia-air mixture - is ignited in the pre-chamber 11 by means of the spark plug 10 and the ignited gas mixture is accelerated through the nozzles 12 from the pre-chamber 11 into the main chamber 5. As a result, ignition of the remaining gas mixture takes place in the main chamber 5 at a plurality of points. Thus, combustion in the ammonia combustion engine 1 may be accelerated.

Fig. 2 shows the ammonia combustion engine 1 according to the invention in a second embodiment on the cylinder 2. In the second embodiment, the ammonia combustion engine 1 comprises a secondary fuel injector 13. The secondary fuel injector 13 leads into the pre-chamber 11 of the ammonia combustion engine 1 and may be configured to inject the gas mixture containing ammonia or a further fuel. The further fuel may be hydrogen, for example. By injecting into the pre-chamber 11, ignition and combustion in the ammonia combustion engine 1 may be further improved.

The embodiments in Fig. 1 and Fig. 2 differ in the secondary fuel injector 13. In the first embodiment, there is no secondary fuel injector 13 and accordingly this is a passive application. In the second embodiment, the ammonia combustion engine 1 contains the secondary fuel injector 13 and thus it is an active application.

## Claims

1. Ammonia combustion engine (1),
- wherein the ammonia combustion engine (1) comprises a main chamber (5) for combustion of the gas mixture containing ammonia,
- wherein the ammonia combustion engine (1) comprises a spark plug (10) for igniting the gas mixture containing ammonia in the main chamber (5),
**characterized**
- **in that** the ammonia combustion engine (1) comprises a pre-chamber (11) arranged between the main chamber (5) and the spark plug (10) for initiating ignition in the main chamber (5),
- **in that** the spark plug (10) is arranged with its ignition end (10a) in the pre-chamber (11), and
- **in that** the main chamber (5) and the pre-chamber (11) are fluidically connected via at least one nozzle (12).

2. Ammonia combustion engine according to claim 1,
**characterized**
- **in that** the pre-chamber (11) is formed in a cylinder head of the ammonia combustion engine (1), or
- **in that** the pre-chamber (11) is formed in a separate insert, and the separate insert is inserted into a cylinder head of the ammonia combustion engine (1) and is fixed to the cylinder head.

3. Ammonia combustion engine according to claim 1 or 2,
**characterized**
**in that** the main chamber (5) and the pre-chamber (11) are fluidically connected via at least two nozzles (12).

4. Ammonia combustion engine according to claim 3,
**characterized**
**in that** at least two of the nozzles (12) have a diameter which differs from one another.

5. Ammonia combustion engine according to claim 3 or 4,
**characterized**
**in that** at least two of the nozzles (12) are aligned different from one another with respect to a longitudinal central axis of the spark plug (10).

6. Ammonia combustion engine according to any one of the preceding claims,
**characterized**
**in that** the at least one nozzle (12) is configured to accelerate an ignited gas mixture from the pre-chamber (11) into the main chamber (5) after ignition of the gas mixture in the pre-chamber (11).

7. Ammonia combustion engine according to any one of the preceding claims, **characterized**
- **in that** the ammonia combustion engine (1) contains at least one direct fuel injector (8) for injecting the gas mixture containing ammonia, the direct fuel injector (8) opening fluidically into the main chamber (5) of the ammonia combustion engine (1), and/or
- **in that** the ammonia combustion engine (1) contains at least one indirect fuel injector (9) for injecting the gas mixture containing ammonia, the indirect fuel injector (9) opening fluidically into an inlet duct (6) of the ammonia combustion engine (1) leading into the main chamber (5).

8. Ammonia combustion engine according to any one of the preceding claims,
**characterized**
**in that** the ammonia combustion engine (1) contains a secondary fuel injector (13), the secondary fuel injector (13) opening fluidically into the pre-chamber (11) of the ammonia combustion engine (1).

9. Ammonia combustion engine according to claim 8,
**characterized**
**in that** the secondary fuel injector (13) is configured for injecting the gas mixture containing ammonia into the pre-chamber (11).

10. Ammonia combustion engine according to claim 8,
**characterized**
**in that** the secondary fuel injector (13) is configured for injecting a further fuel, preferably hydrogen, into the pre-chamber (11).
